# EUROPEAN PATENT SPECIFICATION

(11) **EP 2 465 377 B1**
(45) Date of publication and mention of the grant of the patent: **27.03.2019**
(21) Application number: 10425387.7
(22) Date of filing: 17.12.2010
(51) Int. Cl.: A47B 23/04, A47B 31/06, B60N 3/00, B60R 7/06, B60R 11/00

(54) **Vehicle table and corresponding housing in vehicle dashbord, in particular for industrial or commercial vehicles**
Fahrzeugtisch und entsprechendes Gehäuse im Fahrzeugarmaturenbrett, insbesondere für Industrie- oder Nutzfahrzeuge
Table de véhicule et boîtier correspondant dans un tableau de bord de véhicule, en particulier pour véhicules industriels ou commerciaux

(43) Date of publication of application: 20.06.2012
(73) Proprietor: Iveco S.p.A., 10156 Torino (IT)
(72) Inventor: Armigliato, Marco, 10153 Torino (IT); Bruno, Giuseppe, 10129 Tornino (IT)
(74) Representative: Franzolin, Luigi

(56) References cited:
- EP-A2- 1 160 125
- FR-A1- 2 779 695
- FR-A1- 2 806 042
- US-A1- 2006 220 425
- US-B1- 7 506 923

## Description

### Field of the invention

The present invention refers to a vehicle table and corresponding housing in vehicle dashboard, in particular for industrial or commercial vehicles.

### Description of the prior art

The dimensioning of the vehicle cabin furnishing, especially of industrial or commercial vehicles, is extremely complex because of the need to leave as much free space as possible, especially with reference to the retractable tables.

In particular, a problem arises when it is necessary to install a retractable table in a cabin of an industrial or commercial vehicle, where there is no free space in the area behind the seats, but only in the front part of the cabin. Moreover, the table should be high enough to avoid interfering with the passenger's legs, or with other objects in the cabin, when it is open.

Examples of vehicle retractable tables are disclosed in the patents/patent applications US2006/0220425, US7506923, EP1160125, FR 2779695 and FR2806042. In particular US2006/0220425, US7506923 and EP1160125 disclose a table which is connected to a seat of the vehicle by means of a mechanism for allowing its movement between a retracted position to an extended position. The patent application FR 2779695 discloses a laptop insertable below the steering wheel in a retracted position and suitable to be extracted in a position in front of the driver of the vehicle. FR 2806042 discloses a steering wheel horizontally insertable in a compartment of the dash board so as to generate the space for the extraction of a table contained in the same dashboard in a retracted position.

### Summary of the invention

The aim of the present invention is to provide a vehicle table, and corresponding housing in vehicle dashboard, in particular for industrial or commercial vehicles, suitable to solve the problem set forth above.

The object of the present invention is a vehicle table, in particular for industrial and commercial vehicles, according to claim 1.

According to an aspect of the present invention, the table can be inserted, when it is not in use and it is folded, in an appropriate compartment of the dashboard in the cabin.
A further aim of the present invention is to provide a vehicle cabin layout, of industrial or commercial vehicle, suitable to house the table.

A further object of the present invention is a vehicle cabin layout of industrial or commercial vehicle, suitable to house a compartment containing the table.

Advantageously, the provided table can be both extracted and unfolded, improving accessibility and ergonomics of the table itself.

The object of the present invention is in particular a vehicle table and corresponding housing in the vehicle dashboard, in particular for industrial or commercial vehicles, as described more fully in the claims which are an integral part of the present description.

### Brief description of the Figures

Further characteristics and advantages of the invention will be more apparent in light of a detailed description of a preferred, but non-exclusive, embodiment of the invention itself, shown with the help of the drawings that are attached hereto, which are merely illustrative and not limitative, in which:
figures 1 and 2 show an axonometric view of a vehicle table that is object of the invention, in closed and open position respectively;
figures 3A, 3B, 3C show the opening steps of the table;
figures 4 and 5 show a possible arrangement of the table associated to a housing in the dashboard in the vehicle cabin, in closed and raised position and in open position respectively.

In the figures the same reference numbers and letters identify the same elements or components.

### Detailed description of a preferred embodiment of the invention

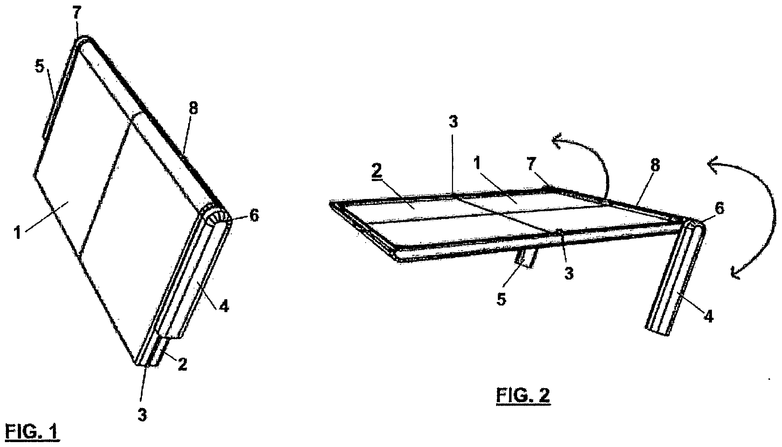

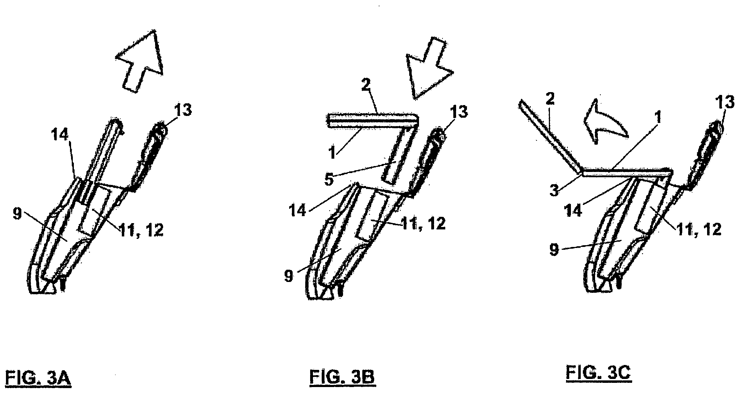

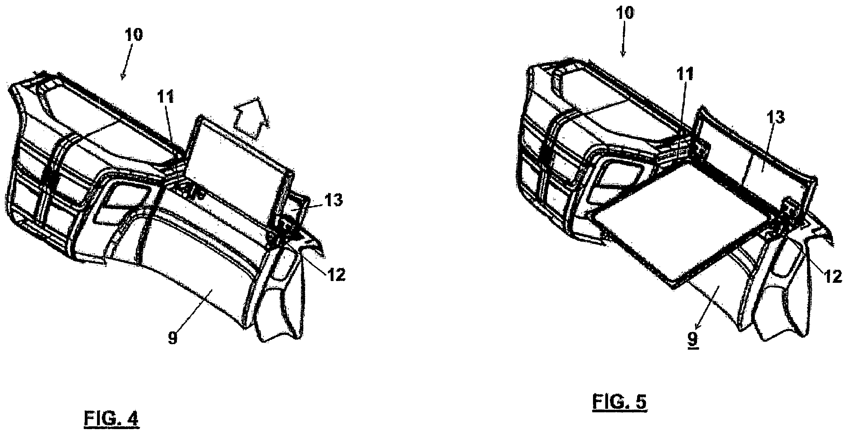

With reference to the figures, the table that is object of the invention comprises a foldable shelf with positioning brackets, which closes by folding onto itself and opens by a clockwise rotation, and is provided with hinges with limit stops. More in particular, it comprises a shelf made by a first 1 and a second 2 part, hinged on their sides whose facing sides are connected by hinges 3. The two parts may have the same or different length.
It further comprises two lateral brackets 4, 5, substantially longitudinally shaped, whose one end is hinged by means of its respective hinges 6, 7 to a side 8 of the first part 1 of the shelf, opposite to the side where the two parts of the shelf are hinged.
The table may take a fully closed position and a fully open position.
With the table in the fully closed position (fig. 1), the two parts 1, 2 of the shelf are folded and in contact with each other, and the two brackets 4, 5 are in line with the edges of the shelf.
With the table in fully open position (fig. 2), the two parts 1, 2 of the shelf are aligned in order to form a single flat surface. For this purpose, hinges 3 are equipped with limit stops, or are positioned on the upper edge of the facing sides of the two parts 1, 2, so that the lower edge of the latter can serve as a limit stop. In this case the two brackets 4, 5 form an acute angle with respect to the lower edge of the shelf: hinges 6, 7 are equipped with a limit stop in such angular position.
In fully closed position, the table is suitable to be put away in an appropriate compartment 9 obtained into the dashboard 10 in the front part of the vehicle cabin, in lateral position, on the side that is opposite to the passenger's seat.
The compartment 9 has a substantially vertical development, possibly oblique, and is equipped with a lid 13. The table is suitable to be inserted and extracted from the upper part of the compartment which comprises the lid.
Inside the compartment, two lateral guides 11, 12, at the opposite sides, are suitable to house the table brackets, when the table is open.
The lateral guides are fixed to the internal opposite sides, and may be an integral part of the compartment itself, for example as folds made during the manufacturing of the dashboard by means of moulding, or as separate components installed in the compartment also aftermarket, as an accessory. They may have, for example, a C-shaped section.
With reference to the figures 3A, 3B, 3C, in order to fix the table in open position, the two brackets 4, 5 are suitable to be inserted in the lateral guides 11, 12, when the table is in fully open position, with the lid 13 being open.
The two brackets may be fixed to the guides my means of elastic pins with telescopic guides that fit into the guides and are fixed by elastic retainers that are locked or released by acting on lateral buttons, not shown in the figures and of the type per se known.
With the table in fully open position, the lower edge of the first part 1 of the shelf stops against the front upper edge 14 of the compartment, realizing a further support to keep the horizontal position of the shelf.
The latter may be fully opened (fig. 5), or half opened (fig. 3B), with the two parts 1, 2 folded one on top of the other, in order to realize a smaller surface bearing.
It should be noted that the height of the open shelf of the table is such that it leaves an adequate space under the table for the legs of the user, which is normally sit on the passenger's seat.
The table may be made of plastic material or of wood chipboard, especially the shelf, while the fixing parts may be made of light metal, such as aluminium.
The compartment 9 may be made so that, even when it contains the folded table, some free space is still available for holding other objects. For example, with reference to figures 3A, 3B, 3C, the folded table may occupy the front part of the compartment, while the rear part, there the guides 11, 12 are placed, remains free and is still available.

It will be apparent to the person skilled in the art that other alternative and equivalent embodiments of the invention can be conceived and reduced to practice without departing from the scope of the invention.

From the description set forth above it will be possible for the person skilled in the art to embody the invention with no need of describing further construction details.

## Claims

1. Vehicle table, in particular for industrial or commercial vehicles, of the type suitable to be contained and extracted from a compartment in the dashboard of the vehicle cabin, comprising:
- a shelf formed by a first (1) and a second foldable part (2) with intermediate hinges (3), said vehicle table being **characterized by** comprising:
- two lateral brackets (4, 5), whose one end is hinged by means of second hinges (6, 7) to a side (8) of the first part (1) of the shelf, opposite to the side where the two parts of the shelf are hinged, wherein said first and second part being suitable to take extreme position fully closed, being folded and in contact with each other, and fully open, being aligned in order to form a single flat surface, by means of said intermediate hinges (3);
and wherein said two lateral brackets (4, 5) being suitable to rotate around said second hinges (6, 7) between a position in line with said first part, in said fully closed position, and an acute angle position with respect to said first part, in said fully open position.

2. Vehicle table as in claim 1, wherein said intermediate hinges (3) and said second hinges (6, 7) are suitable to realize respective limit stops in said fully open position.

3. Vehicle table as in claim 1, wherein said two lateral brackets (4, 5) comprise elastic pins with telescopic guides.

4. Assembly comprising a vehicle cabin dashboard, this latter comprising a compartment (9) equipped with a lid (13), said compartment containing a vehicle table according to the preceding claims in said fully closed position, said compartment internally containing at opposite sides lateral guides (11, 12) suitable to house the table's brackets, in said fully open position.

5. Assembly according to claim 4, wherein said lateral guides are fixed to the opposite internal sides of the compartment as an integral part of the compartment, or as separate components installed in the compartment.

6. Assembly according to claim 4, wherein said lateral guides comprise elastic limit stops in order to allow to said elastic pins with telescopic guides to fit and get stuck into said guides.

7. Assembly according to claim 4, wherein said compartment is equipped with a front upper edge (14) in such position that, with the table in fully open position, the lower edge of the first part 1 of the shelf stops against the front upper edge, realizing a further support to keep the horizontal position of the shelf.

8. Vehicle cabin of industrial or commercial vehicle, comprising a passenger's seat, a table according to any of the claims from 1 to 3, and an assembly according to claims 4 to 7, in a position opposite the passenger's seat.

## Patentansprüche

1. Fahrzeugtisch, insbesondere für ein Industrie- oder Nutzfahrzeug, von der Art geeignet, in einem Fach des Armaturenbretts der Fahrzeugkabine aufbewahrt und daraus herausgezogen zu werden, umfassend:
- ein Bord, gebildet aus einem ersten (1) und einem zweiten faltbaren Teil (2) mit dazwischen angeordneten Scharnieren (3),
welcher Fahrzeugtisch **dadurch gekennzeichnet ist, dass** er folgendes umfasst:
- zwei seitliche Klammern (4,5), von welchen ein Ende mittels zweiter Scharniere (6,7) an eine Seite des ersten Teils (1) des Bords angelenkt ist, gegenüberliegend der Seite, an welcher die zwei Teile des Bords schwenkbar miteinander verbunden sind,
wobei der erste und der zweite Teil dazu geeignet sind, eine äußerste vollständig geschlossene Stellung einzunehmen, in der sie gefaltet sind und einander berühren, und eine vollständig offene Stellung, in der sie aufeinander ausgerichtet sind, so dass sie eine einzige flache Oberfläche bilden, mittels der zwischen ihnen angeordneten Scharniere (3);
und wobei die zwei seitlichen Klammern (4,5) dazu geeignet sind, um die zweiten Scharniere (6,7) zwischen einer Stellung zu rotieren, in der sie auf den ersten Teil in der vollständig geschlossenen Stellung ausgerichtet sind, und einer schräg abgewinkelten Stellung bezüglich des ersten Teils in der vollständig geöffneten Stellung.

2. Fahrzeugtisch gemäß Anspruch 1, bei welchem die Zwischenscharniere (3) und die zweiten Scharniere (6,7) dazu geeignet sind, Anschläge in der vollständig geöffneten Stellung zu bilden.

3. Fahrzeugtisch gemäß Anspruch 1, bei welchem die zwei seitlichen Klammern (4,5) elastische Stifte mit Teleskopführungen umfassen.

4. Anordnung, umfassend ein Armaturenbrett einer Fahrzeugkabine, welches ein Fach (9) umfasst, das mit einem Deckel (13) ausgestattet ist, welches Fach einen Fahrzeugtisch gemäß einem der vorhergehenden Ansprüche in der vollständig geschlossenen Stellung enthält, welches Fach innen an gegenüberliegenden Seiten seitliche Führungen (11,12) umfasst, geeignet zur Aufnahme der Klammern des Tisches in der vollständig geöffneten Stellung.

5. Anordnung gemäß Anspruch 4, bei welcher die seitlichen Führungen an den gegenüberliegenden inneren Seiten des Fachs als einstückiger Bestandteil des Fachs befestigt sind, oder als einzelne Komponenten, die in dem Fach installiert sind.

6. Anordnung gemäß Anspruch 4, bei welcher die seitlichen Führungen elastische Anschläge umfassen, welche es den elastischen Stiften mit Teleskopführungen ermöglichen, in die Führungen eingepasst zu werden und darin Halt zu finden.

7. Anordnung gemäß Anspruch 4, bei welcher das Fach mit einer vorderen oberen Kante (14) in einer solchen Position versehen ist, in welcher bei vollständig geöffneter Stellung des Tisches die untere Kante des ersten Teils (1) des Bords an der vorderen oberen Kante anschlägt, zur weiteren Stützung zum Halten der horizontalen Stellung des Bords.

8. Fahrzeugkabine eines Industrie- oder Nutzfahrzeugs, umfassend einen Passagiersitz, einen Tisch gemäß einem der Ansprüche 1 bis 3 und eine Anordnung gemäß den Ansprüchen 4 bis 7 in einer Position gegenüberliegend dem Passagiersitz.

## Revendications

1. Table de véhicule, en particulier pour véhicules industriels ou commerciaux, du type approprié pour être contenu et extrait d'un compartiment dans le tableau de bord de l'habitacle de véhicule, comprenant :
- une étagère formée par une première (1) et une seconde (2) partie pliantes avec des charnières intermédiaires (3),
ladite table de véhicule étant **caractérisée en ce qu'**elle comprend :
- deux supports latéraux (4, 5), dont une extrémité s'articule au moyen de secondes charnières (6, 7) sur un côté (8) de la première partie (1) de l'étagère, opposé au côté où les deux parties de l'étagère s'articulent,
dans laquelle lesdites première et seconde parties sont appropriées pour adopter une position extrême totalement fermée, étant pliées et en contact l'une avec l'autre, et totalement ouverte, étant alignées afin de former une surface plate unique, au moyen desdites charnières intermédiaires (3) ;
et dans laquelle lesdits deux supports latéraux (4, 5) sont appropriés pour tourner autour desdites secondes charnières (6, 7) entre une position en ligne avec ladite première partie, dans ladite position totalement fermée, et une position d'angle aigu par rapport à ladite partie, dans ladite position totalement ouverte.

2. Table de véhicule selon la revendication 1, dans laquelle lesdites charnières intermédiaires (3) et lesdites secondes charnières (6, 7) sont appropriées pour réaliser des butées de limite respectives dans ladite position totalement ouverte.

3. Table de véhicule selon la revendication 1, dans laquelle lesdits deux supports latéraux (4, 5) comprennent des tiges élastiques avec des guides télescopiques.

4. Ensemble comprenant un tableau de bord d'habitacle de véhicule, ce dernier comprenant un compartiment (9) équipé d'un couvercle (13), ledit compartiment contenant une table de véhicule selon les revendications précédentes dans ladite position totalement fermée, ledit compartiment contenant intérieurement au niveau de côtés opposés des guides latéraux (11, 12) appropriés pour loger les supports de la table, dans ladite position totalement ouverte.

5. Ensemble selon la revendication 4, dans lequel lesdits guides latéraux sont fixés aux côtés internes opposés du compartiment en tant que partie solidaire du compartiment, ou en tant que composants séparés installés dans le compartiment.

6. Ensemble selon la revendication 4, dans lequel lesdits guides latéraux comprennent des butées de limite élastiques afin de permettre auxdites tiges élastiques avec guides télescopiques de s'insérer dans lesdits guides et de s'y coincer.

7. Ensemble selon la revendication 4, dans lequel ledit compartiment est équipé d'un bord supérieur avant (14) dans une position telle que, avec la table dans la position totalement ouverte, le bord inférieur de la première partie (1) de l'étagère s'arrête contre le bord supérieur avant, réalisant un support supplémentaire pour maintenir la position horizontale de l'étagère.

8. Habitacle de véhicule de véhicule industriel ou commercial, comprenant un siège du passager, une table selon l'une quelconque des revendications 1 à 3, et un ensemble selon les revendications 4 à 7, dans une position opposée au siège du passager.
